# EUROPÄISCHE PATENTSCHRIFT

(11) **EP 3 353 582 B1**
(45) Veröffentlichungstag und Bekanntmachung des Hinweises auf die Patenterteilung: **30.03.2022**
(21) Anmeldenummer: 16775592.5
(22) Anmeldetag: 22.09.2016
(51) Int. Cl.: G02B 5/02, F21V 5/00, G02F 1/1335, G02B 5/04

(54) **OPTISCHE FOLIE UND LEUCHTE MIT EINER SOLCHEN**
OPTICAL FILM AND LIGHT FIXTURE WITH SUCH AN OPTICAL FILM
FILM OPTIQUE ET LUMINAIRE COMPRENANT UN TEL FILM

(30) Priorität: 24.09.2015 CH 13832015
(43) Veröffentlichungstag der Anmeldung: 01.08.2018
(73) Patentinhaber: Regent Beleuchtungskörper AG, 4053 Basel (CH)
(72) Erfinder: REUTTER, Kornelius, 4056 Basel (CH); FERNANDEZ, Oscar, 4133 Pratteln (CH); FERRINI, Rolando, 3006 Bern (CH); HOCHFILZER, Christian, 4059 Basel (CH); DREYFUS, Thierry, 4052 Basel (CH)
(74) Vertreter: Latscha Schöllhorn Partner AG
(86) Internationale Anmeldenummer: PCT/EP2016/072599
(87) Internationale Veröffentlichungsnummer: WO 2017/050929

(56) Entgegenhaltungen:
- EP-A1- 2 647 904
- WO-A1-96/23649
- WO-A1-2013/116104
- US-A- 4 497 860
- US-A1- 2013 070 478
- US-A1- 2013 107 575
- US-A1- 2014 301 086
- US-A1- 2015 153 013

## Beschreibung

### Technisches Gebiet

Die Erfindung betrifft eine optische Folie gemäss dem Oberbegriff des unabhängigen Anspruchs 1 sowie eine Leuchte mit einer solchen optischen Folie. Optischen Folien aus einem lichtdurchlässigen Material mit einer Oberfläche und einer optischen Mikrostruktur, die eine Vielzahl von Erhebungen umfasst, wobei die Erhebungen der Mikrostruktur von einer Referenzebene abstehen, die parallel zur Oberfläche liegt, können zu einem anwendungsspezifischen und effizienten Formen von ab- beziehungsweise ausgestrahltem Licht eingesetzt werden.

### Stand der Technik

Zur Anpassung und Einstellung der Leuchteigenschaften von Leuchten ist es bekannt, mit Strukturen ausgestattete, transparente Optiken einzusetzen. Dabei decken die Optiken ein oder mehrere Leuchtmittel so ab, dass vom Leuchtmittel abgestrahltes Licht die Optik durchdringt und von dieser angepasst wird. Beispielsweise kann eine solche Anpassung ein Richten des Lichts, ein Dämpfen des Lichts, ein Färben des Lichts, ein Streuen des Lichts oder ähnliches umfassen.

Bekanntermassen werden solche Optiken hergestellt, indem die Strukturen direkt in einem festen Substrat der Optik ausgeformt werden. Beispielsweise können die Strukturen in das Substrat der Optik geschliffen werden. Solche Optiken mit Strukturen im festen Substrat sind jedoch verhältnismässig teuer in der Herstellung und verhältnismässig schwierig in der Formgestaltung insbesondere bei grossen Leuchten.

Eine andere bezüglich der Nachteile der vorstehenden Optiken verbesserte Art der Bereitstellung von Optiken ist es, ein lichtdurchlässiges Substrat mit einer Lichtbeziehungsweise Leuchteigenschaften anpassenden optischen Folie zu versehen. Das Substrat kann dabei ein transparenter fester Kunststoff, Glas oder dergleichen sein. Indem das Substrat mit einer optischen Folie versehen wird, kann es auf effiziente Weise mit anwendungsbezogenen Eigenschaften ausgestattet werden. Auch lässt sich so eine wunschgemässe Optik mit verhältnismässig geringem Aufwand herstellen.

Beispielsweise sind Folien bekannt, die auf ein Substrat aufgebracht wie beispielsweise aufgeklebt oder aufgelegt werden. Dazu können die Folien selbst bereits auf einer Seite klebend sein oder die Folien können in einem Herstellungsschritt der Optik mit einem zusätzlichen Klebstoff am Substrat befestigt werden. Solche Folien sind teilweise zur Streuung oder Dämpfung des Lichts vorgesehen.

In der WO 2012/141899 A1 ist eine Ausführung einer solchen Folie beschrieben. Die Folie ist aus einem lichtdurchlässigen Material hergestellt und weist eine Oberfläche und eine optischen Mikrostruktur auf. Die optische Mikrostruktur besteht aus einer Vielzahl von Erhebungen, die von der Oberfläche abstehen. Die Erhebungen der Mikrostruktur der Folie sind gemäss der Lehre der WO 2012/141899 A1 als Konen, Prismen oder Pyramiden ausgestaltet, deren Seiten einen zufälligen und variierenden Basiswinkel aufweisen. Dieser Basiswinkel entspricht dem Winkel zwischen einer Richtung orthogonal zur Oberfläche der Folie und der zugehörigen Seite der Erhebung. Er soll einen zufälligen, zwischen 10° und 60° liegenden Wert aufweisen. Der mit der Folie bestückten Optik soll die Mikrostruktur einerseits dazu verhelfen, durchdringendes Licht zu entblenden, indem das Licht von Seiten der Erhebungen der Mikrostruktur gerichtet wird. Andererseits soll der zufällige Basiswinkel der Erhebungen dazu dienen, dass die Lichtquelle weniger beziehungsweise gar nicht mehr sichtbar ist, was insbesondere bei LED-Leuchtmitteln ein Anliegen sein kann.

Nachteilig bei Folien der vorstehend beschriebenen Art ist, dass insbesondere bei ihrer Verwendung in einer längsförmigen Leuchte beziehungsweise Linearleuchte für viele Zwecke keine befriedigende Entblendung des abgestrahlten Lichts erreicht wird. Zudem kann mit solchen Folie meistens auch keine auf die konkrete Anwendung hin optimierte Lichtverteilungskurve (LVK) erreicht werden. Insbesondere kann auch die Formung des abgestrahlten Lichtkegels bei Lichtquellen, die ungerichtetes Licht abgeben, wie beispielsweise organische Leuchtdioden (OLED), nicht ausreichend effizient und präzise sein.

Vor diesem Hintergrund ist es eine Aufgabe der vorliegenden Erfindung eine optische Folie beziehungsweise eine Leuchte vorzuschlagen, die mit verhältnismässig hoher Effizienz entblendet und die bei ungerichteten oder teilweise gerichteten Lichtquellen effizient einsetzbar ist.

### Darstellung der Erfindung

Die Aufgabe wird erfindungsgemäss durch eine optische Folie gelöst, wie sie durch die Merkmale des unabhängigen Anspruchs 1 definiert ist, sowie durch eine Leuchte, wie sie durch die Merkmale des unabhängigen Anspruchs 11 definiert ist. Vorteilhafte Ausführungsvarianten der Erfindung ergeben sich aus den abhängigen Ansprüchen.

Das Wesen der Erfindung besteht im Folgenden: Eine optische Folie aus einem lichtdurchlässigen Material umfasst eine Oberfläche und eine optische Mikrostruktur mit einer Vielzahl von Erhebungen. Die Erhebungen der Mikrostruktur stehen von einer Referenzebene ab, die parallel zur Oberfläche liegt. Die Erhebungen der Mikrostruktur weisen jeweils einen an die Referenzebene angrenzenden Flankenabschnitt auf, der einen einheitlichen Winkel mit der Referenzebene beschreibt. Der einheitliche Winkel liegt in einem Bereich von etwa 33° bis etwa 42° oder in einem Bereich von etwa 35° bis etwa 40°.

Die Oberfläche der optischen Folie kann die Seite der Folie sein, auf der sich die Erhebungen befinden. Oder es kann auch die entgegengesetzte Seite der optischen Folie sein, die typischerweise eben ausgestaltet ist. In einer Ausführungsform kann sich die Oberfläche auf der Höhe der Spitzen der Erhebungen befinden. In diesem Fall ist die Referenzebene parallel und beabstandet zur Oberfläche. In einer anderen Ausführungsform kann die Oberfläche auch in der Referenzebene liegen. Die Oberfläche ist dann also parallel zur Referenzebene aber nicht von ihr beabstandet. Typischerweise erstreckt sich die Oberfläche sowie auch die Referenzebene quasi rechtwinklig zu einer Haupt- oder Mittelabstrahlungsrichtung einer Leuchte, in der die optische Folie eingesetzt wird. In vielen Anwendungen wie beispielsweise bei Deckenleuchten oder Stehleuchten ist die Haupt- beziehungsweise Mittelabstrahlungsrichtung vertikal und die Oberfläche beziehungsweise die Referenzebene liegt entsprechend horizontal. Die Erhebungen stehen dabei typischerweise von der Oberfläche ab.

Der Begriff "lichtdurchlässig" kann sich im Zusammenhang mit der optischen Folie insbesondere auf eine gedämpfte oder ungedämpfte Durchlässigkeit des mittels eines Leuchtmittels einer Leuchte erzeugten Lichts beziehen.

Der Begriff "einheitlich" bezieht sich im Zusammenhang mit dem Flankenabschnitt einer der Erhebungen darauf, dass die Erhebung in Umfangrichtung einen einzigen, im Wesentlichen gleichen Winkel mit der Referenzebene beschreibt. Dabei können beispielsweise aus fertigungstechnischen Gründen auftretende Toleranzabweichungen vorhanden sein, die immer noch als einheitlich in diesem Sinne gelten. Beispielsweise können solche Toleranzabweichungen in einem Umfang von bis etwa 1° vorkommen.

Gemäss bekannter Normen wie beispielsweise der Norm Nr. DIN EN 12464-1 des Deutschen Instituts für Normung kann sich der Begriff "Entblendung" darauf beziehen, dass für bestimmte Anwendungen von Leuchten, das in einem für sämtliche Ausstrahlungswinkel, die grösser sind als 65°, gemessen gegen die nach unten gerichtete Vertikale, abgegebene Licht eine Leuchtdichte von 3'000 Candela pro Quadratmeter (cd/m²) nicht überschreiten darf.

Die Fähigkeit zur Entblendung kann als Antiglare Performance (AP) erfasst beziehungsweise angegeben werden. Dabei gibt die AP an, wieviel Lichtstrom (Lumen) aus einer vorgegebenen Vergleichsfläche im Sinne der vorstehend erwähnten Norm entblendet ausgestrahlt werden kann. Je höher die AP, desto mehr Freiheitsgrade können sich bei der Gestaltung einer zugehörigen Leuchte ergeben und desto miniaturisierter beziehungsweise kompakter könnte die Leuchte gebaut werden.

Der Begriff "optische Folie" im Sinne der Erfindung kann sich auf ein verhältnismässig grossflächiges, dünnes Gebilde beziehen. Solche Gebilde weisen typischerweise eine im Verhältnis zur Dicke viel grössere Oberfläche auf. Beispielsweise können solche Gebilde eine Dicke von weniger als 1 Millimeter (mm) und typischerweise weniger als 0,1 mm aufweisen. Die zugehörige Oberfläche kann quasi beliebig gross sein. Sie kann beispielsweise mindestens 5 Zentimeter (cm) auf 5 cm betragen. Damit ergibt sich bei der optischen Folie ein Verhältnis von Oberfläche zu Dicke von mindestens etwa 25'000 oder typischerweise mindestens etwa 250'000.

Optische Folien können aus unterschiedlichen Materialien hergestellt sein. Insbesondere können Folien aus Kunststoff effizient und flexibel hergestellt werden. Dabei sind solche Folien vorzugsweise aus einem Material mit einem Brechungsindex in einem Bereich von etwa 1.3 bis etwa 1.7 wie beispielsweise aus einem Kunststoff und insbesondere aus einem Polycarbonat hergestellt. Alternative Kunststoffe können beispielsweise Polyethylen oder Polymethylmethacrylat sein. In diesem Zusammenhang wird unter dem Begriff "Brechungsindex" eine optische Materialeigenschaft verstanden, die angibt, um welchen Faktor die Wellenlänge und die Phasengeschwindigkeit des Lichts im Material kleiner sind als im Vakuum. In Kombination mit dem erfindungsgemässen einheitlichen Winkel ermöglichen Folien aus solchen Materialien ein besonders effizientes Erreichen der Effekte und Vorteile der Erfindung.

Folien aus Kunststoff beziehungsweise Polycarbonat können in effizienter und präziser Weise mit Mikrostrukturen der erfindungsgemässen Art versehen werden. Beispielsweise können solche Mikrostrukturen mittels Laserablation, Heissprägung, Ultraviolett-Casting, Spritzguss, Pressformung oder einem generativ aufbauendem Verfahren wie 3D-Printing auf beziehungsweise in den Kunststoff geformt werden. Bei in Serie hergestellten Folien kann es auch zweckmässig sein, einen Master zu fertigen und die Folie durch Vervielfältigung beispielsweise im Roll-To-Roll-Verfahren herzustellen. Zur Fertigung des Masters mit der Mikrostruktur kann beispielsweise Laserablation, Fräsen beziehungsweise Mikrofräsen, Elektronenstrahl-Bearbeitung oder generatives Aufbauen wie 3D-Printing angewendet werden.

Die erfindungsgemässe optische Folie kann vergleichsweise einfach und effizient hergestellt werden. Sie ist auch flexibel einsetzbar. Beispielsweise kann sie verhältnismässig einfach auf die Form einer zugehörigen Optik oder einer anderen Komponente einer Leuchte zugeschnitten werden. Zudem kann sie sich auch der Form der Optik oder Leuchte wie beispielsweise einer Krümmung anpassen. Weiter kann sie auch verhältnismässig robust sein, was eine einfache Handhabung und eine hohe Lebensdauer ermöglicht.

Die erfindungsgemässe optische Folie ermöglicht es weiter einer Leuchte, auf wirksame Weise eine hohe Entblendung zu erreichen. Gleichzeitig ermöglicht sie auch eine effektive und präzise Formung des von der Leuchte ausgestrahlten Lichts insbesondere auch, wenn die Leuchte eine ungerichtete oder teilweise gerichtete Leuchtquelle wie beispielsweise eine oder mehrere organische Leuchtdioden (OLED) aufweist. Dabei kann über den einheitlichen Winkel der Flankenabschnitte der Erhebungen in den angegebenen Bereichen eine bevorzugte Lichtverteilungskurve (LVK) erzeugt werden. Beispielsweise kann das ausgestrahlte Licht auch asymmetrisch oder flügelartig geformt sein.

Weiter kann die erfindungsgemässe Folie aus ästhetischer Sicht vorteilhaft sein, da die Mikrostrukturen mit blossem Auge nur sehr eingeschränkt oder gar nicht wahrnehmbar sind. Dadurch kann ein unauffälliges sauberes Aussehen erreicht werden. Die verhältnismässig starke Entblendung und Lichtlenkung der Folie kann also ästhetisch nicht in Erscheinung treten, vielmehr kann die Folie optisch als einfache diffuse Folie erscheinen. Dies bietet viele Anwendungsmöglichkeiten beispielsweise bei der architekturintegrierten Beleuchtung. Auch können mit der gleichen Ästhetik unterschiedliche LVK realisiert sein. Auch das bei bekannten Optiken mit einer Makrostruktur auftretende "Kippbild" kann mit der Folie verhindert werden. Mit "Kippbild" kann in diesem Zusammenhang eine Wahrnehmung von Strukturen oder Geometrien gemeint sein. Insbesondere kann sich dieser Begriff darauf beziehen, dass das erzeugte Leuchtflächenbild in einem bestimmten Betrachtungswinkel plötzlich, das heisst abrupt und nicht fliessend, ändert.

Erfindungsgemäß sind die Erhebungen der Mikrostruktur der optischen Folie jeweils als Konus oder Kegel ausgestaltet. Solche Formen ermöglichen eine geometrisch verhältnismässig einfache Ausgestaltung der Erhebungen mit jeweils eindeutig festgelegten Flankenabschnitten. Dadurch können die einheitlichen Winkel verhältnismässig einfach implementiert werden. Zudem kann dadurch eine LVK präzise vorbestimmt werden.

Bevorzugt weisen die Erhebungen der Mikrostruktur eine hexagonale Grundfläche auf. Unter dem Begriff "Grundfläche" kann im Zusammenhang mit den Erhebungen insbesondere der Querschnitt der Erhebung auf der Höhe der Referenzebene verstanden werden. Erhebungen mit hexagonalen Grundflächen können eine grosse beziehungsweise maximale Beschickung der optischen Folie mit Erhebungen auf eine effiziente Weise ermöglichen. Zudem kann auch der Anteil an Zonen der optischen Folie, die keine bestimmungsgemäss lichtformende Wirkung haben, minimiert werden. Dadurch kann die optische Folie eine verhältnismässig grosse Effizienz hinsichtlich der lichtformenden beziehungsweise -richtenden Wirkung haben.

Erfindungsgemäß weisen die Erhebungen der Mikrostruktur der optischen Folie eine abgerundete Spitze auf. Unter dem Begriff "Spitze" kann im Zusammenhang mit den Erhebungen ein Bereich Verstanden werden, welcher der Referenzebene abgewandt beziehungsweise maximal von dieser entfernt ist. Die Spitze einer Erhebung kann deren Grundfläche entgegengesetzt sein. Eine solche abgerundete Spitze kann helfen, unerwünschte Farbeffekte beziehungsweise Rainbow-Effekte zu minimieren oder zu verhindern. Dies kann dadurch erreicht werden, dass kantige Formen beziehungsweise Übergänge in der Mikrostruktur reduziert beziehungsweise vermieden werden. Dabei grenzen die abgerundeten Spitzen der Erhebungen bevorzugt jeweils an deren Flankenabschnitte an.

Vorzugsweise umfassen die Erhebungen jeweils eine beispielsweise der hexagonalen Grundfläche entsprechende Grundfläche, die einen maximalen Durchmesser aufweist, der in einem Bereich von etwa 5 µm bis etwa 250 µm oder in einem Bereich von etwa 50 µm bis etwa 200 µm oder in einem Bereich von etwa 150 µm bis etwa 190 µm liegt. Zudem weisen die Erhebungen bevorzugt jeweils eine Höhe auf, die in einem Bereich von etwa 5 µm bis etwa 100 µm oder in einem Bereich von etwa 20 µm bis etwa 80 µm oder in einem Bereich von etwa 30 µm bis etwa 60 µm liegt. Bei Erhebungen mit jeweils einer Grundfläche und einer Spitze kann die Höhe durch den Abstand zwischen Grundfläche und Spitze definiert sein. So dimensionierte Erhebungen als Mikrostruktur ermöglichen, dass die optische Folie eine bevorzugte Wirkung erzeugt und gleichzeitig verhältnismässig effizient herstellbar ist.

Der einheitliche Winkel kann zwischen einzelnen Erhebungen oder zwischen Gruppen von Erhebungen unterschiedlich sein. Das heisst die erwähnten Winkel sind pro Erhebung einheitlich aber unter den Erhebungen variierend. Dies kann ein flexibles Anpassen einer LVK ermöglichen. Bevorzugt weisen jedoch alle Erhebungen der Mikrostruktur der optischen Folie den gleichen einheitlichen Winkel auf. Der Begriff "gleich" im Zusammenhang mit den einheitlichen Winkeln kann sich darauf beziehen, dass alle Erhebungen einen identischen einheitlichen Winkel aufweisen. Dabei können beispielsweise aus fertigungstechnischen Gründen auftretende Toleranzabweichungen vorkommen, die immer noch als gleich in diesem Sinne gelten. Beispielsweise können solche Toleranzabweichungen einen Wert in einem Umfang von bis etwa 1° betragen. Eine so ausgestaltete optische Folie ermöglicht auf effiziente Weise eine homogene Erzeugung einer bevorzugten beziehungsweise bestimmungsgemässen Wirkung.

Ein weiterer Aspekt der Erfindung betrifft eine Leuchte mit einem Leuchtmittel und einer wie oben beschriebenen optischen Folie. Mit dem Leuchtmittel ist Licht im Wesentlichen ungerichtet abstrahlbar. Die optische Folie deckt das Leuchtmittel in eine Abstrahlrichtung der Leuchte ab. Das Leuchtmittel kann beispielsweise eine OLED oder ein OLED-Feld sein. Oder es kann eine mit einer lichtstreuenden Optik ausgestattete Leuchtdiode beziehungsweise ein Feld von solchen Leuchtdioden sein.

Der Begriff "Leuchtdiode" kann synonym für lichtemittierende Diode oder Light Emitting Diode (LED) verstanden werden. Die Leuchtdioden können in einer Aufsicht beispielsweise rund, elliptisch, quadratisch oder rechteckig ausgestaltet sein. Sie können auf einer Platine befestigt sein, die zusätzlich mit einer Steuerungselektronik zum Betreiben der Leuchtdioden ausgestattet sein kann.

Der Begriff "Platine" kann sich in diesem Zusammenhang auf eine Leiterplatte (Printed Circuit Board, PCB) beziehen, die ein Träger für elektronische Bauteile ist. Im Allgemeinen dienen Platinen der mechanischen Befestigung und elektrischen Verbindung elektronischer Bauteile. Üblicherweise bestehen Leiterplatten beziehungsweise Platinen aus einem elektrisch isolierenden Material mit daran haftenden, leitenden Verbindungen (Leiterbahnen). Als isolierendes Material ist faserverstärkter Kunststoff gängig. Die Leiterbahnen werden zumeist aus einer dünnen Schicht Kupfer geätzt. Die Bauelemente werden auf Lötflächen (Pads) oder in Lötaugen gelötet. Grössere Komponenten können auch mit Kabelbindern, Klebstoff oder Verschraubungen auf der Platine befestigt werden.

Der Begriff "ungerichtet" im Zusammenhang mit dem Leuchtmittel der Leuchte kann sich darauf beziehen, dass Licht nicht vordefiniert in eine bestimmte Richtung abgestrahlt wird, sondern in einem gewissen Umfang in unterschiedlicher Richtung. Ungerichtetes Licht kann auch als diffuses Licht bezeichnet werden beziehungsweise solches umfassen. Insbesondere kann unter diesem Begriff verstanden werden, dass das Leuchtmittel Licht in einem gewissen Umfang in zufälliger beziehungsweise unbestimmter Richtung abstrahlt. Mitumfasst kann dabei auch ein teilweise gerichtetes Leuchten sein, solange ein Anteil an ungerichtetem Licht im vorstehenden Sinne vorhanden ist.

Mit einer erfindungsgemässen Leuchte können die oben im Zusammenhang mit der optischen Folie erläuterten Effekte und Vorteile auf effiziente Weise realisiert sein. Dabei kann die optische Folie auf einem festen Teil der Optik aufgebracht sein. Beispielsweise kann die optische Folie auf das feste Teil aufgelegt sein oder an dieses angeklebt. Beim Verkleben der optischen Folie auf das feste Teil der Optik ist zu beachten, dass der verwendete Kleber ebenfalls einen Brechungsindex aufweist. Um die Lichtgestaltung der optischen Folie nicht zu beeinträchtigen wird vorzugsweise ein Kleber beziehungsweise ein Klebstoff mit einem Brechungsindex von möglichst nahe 1 verwendet.

Die Leuchte ist vorzugsweise als Linearleuchte ausgebildet. Dabei kann sie eine Serie von OLEDs oder LEDs als Leuchtmittel aufweisen. Der Begriff "Linearleuchte" kann sich in diesem Zusammenhang auf längsförmige Leuchte beziehen, wie sie heutzutage häufig zur Beleuchtung von Innen- und Aussenräumen eingesetzt werden. Dabei kann sich der Begriff "längsförmig" auf eine lineare, quasi lineare oder auch gekrümmte Form beziehen. Die Längsausdehnung ist jedoch in jedem Fall grösser als die Ausdehnung in der Breite. Dabei kann die Linearleuchte oder benannte Teile davon in einem Querschnitt entlang einer Längsrichtung im Wesentlichen gerade ausgestaltet sein. Typischerweise erstrecken sich Linearleuchten entlang eines Raumes oder eines Objektes, an dem sie angeordnet sind. Sie können beispielsweise direkt auf Wände, abgependelt oder auf Decken angebaut beziehungsweise daran befestigt werden.

Die Leuchte kann gestapelt aufgebaut sein. Dabei kann die Lichtquelle durch einen Luftspalt von der optischen Folie getrennt sein und so einen Stapel bilden. Oder die optische Folie kann mit einem Klebstoff auf dem Leuchtmittel befestigt sein, sodass Leuchtmittel, Klebstoff und optische Folie einen Stapel bilden. Eine solche gestapelte Konstruktion ermöglicht eine kompakte Bauweise.

Vorzugsweise ist die optische Folie in der Leuchte unmittelbar benachbart zum Leuchtmittel angeordnet. Der Begriff "unmittelbar benachbart" kann sich in diesem Zusammenhang darauf beziehen, dass die optische Folie so nahe wie technisch sinnvoll beziehungsweise machbar am Leuchtmittel liegt. Indem die optische Folie mittels der erfindungsgemässen Mikrostruktur verhältnismässig flexibel ausgestaltet ist und verhältnismässig dünn und/oder beweglich ausgestaltet sein kann, ist es möglich, dass sie der Form der Leuchte oder bestimmter Komponenten davon angepasst ist. Dadurch kann die Leuchte äusserst kompakt sein, was in vielen Anwendungen vorteilhaft sein kann.

Die erfindungsgemässe optische Folie und die erfindungsgemässe Leuchte können beispielsweise in den folgenden Anwendungsgebieten vorteilhaft sein beziehungsweise eingesetzt werden: Architektonische Beleuchtungsanwendungen, Theaterbeleuchtungsanwendungen und generelle Ausleuchtungsanwendungen. Die Anwendungsgebiete umfassen ebenfalls Unterwasserbeleuchtungsanwendungen beispielsweise in Schwimmbädern, Brunnen oder Wellness-Bädern, Verkehrsbeleuchtungsanwendungen, Fahrzeugbeleuchtungsanwendungen, medizinische Beleuchtungsanwendungen beispielsweise in Spitälern, Bürobeziehungsweise Schulbeleuchtungsanwendungen, Einzelhandel- beziehungsweise Einkaufsgeschäftsbeleuchtungsanwendungen und ganz generell industrielle Beleuchtungsanwendungen.

Die generellen Ausleuchtungsanwendungen wie vorstehend aufgeführt können Beleuchtungsanwendungen im Privaten, im Kommerziellen und im Industriellen sein. Dabei können folgende Charakteristika vorhanden sein: Es wird Licht im sichtbaren Bereich mit einer Wellenlänge von zwischen 350mm bis 850nm eingesetzt, die Beleuchtungen sind standardisiert und auswechselbar, die Beleuchtungen werden gemäss dem Standard IEC/PAS 62717 "Performance requirements - LED modules for general lighting" oder dem Standard "IEC/PAS 62722 Performance requirements - LED luminaries for general lighting" hergestellt, die Beleuchtungen umfassen eine Intelligenz wie beispielsweise Sensoren und Kommunikationszellen, um eine verbundene Beleuchtung bereitzustellen, und/oder die Beleuchtungen haben einen allgemeinen Leuchtzeck und können in die Typen funktional und dekorativ eingeteilt werden.

Die Verkehrsbeleuchtungsanwendungen wie vorstehend aufgeführt können fortgeschrittene Beleuchtungsanwendungen sein, mit denen beabsichtigt ist, Dienste anzubieten, die sich auf verschiedene Arten des Transports und des Verkehrsmanagements beziehen. Sie können ermöglichen, dass die unterschiedlichen Benutzer besser informiert sind und dass Netzwerke sicherer, koordinierter und schlauer verwendet werden. Beispielsweise kommen solche Verkehrsbeleuchtungsanwendungen in intelligenten Transportnetzwerken (ITS) in allen Arten des Transports vor. Dabei ist in der EU Richtlinie 2010/40/EU (7. July 2010) definiert, welche Informationen und Kommunikationstechnologien in ITS Systemen in Gebieten wie Strassentransport inklusive Infrastruktur, Fahrzeuge und Benutzer sowie in Verkehrs- beziehungsweise Mobilitätsmanagement und Schnittstellen für andere Transportarten angewendet werden.

Die Fahrezugbeleuchtungsanwendungen wie vorstehend aufgeführt können alle Beleuchtungsanwendungen sein, die Licht im Innern und Äussern von Personenfahrzeugen sowie leichten und schweren Nutzfahrzeugen bereit stellen. Beispielsweise können solche Anwendungen folgendes umfassen: Vorder- und Rückbeleuchtung, Sichtbarkeits-, Signal- und Identifikationslichter, Notfallwarngeräte, Innenraum- und Komfortbeleuchtung inklusive Verteilungsbeleuchtung sowie Im-Dienst-Fahrzeuge.

### Kurze Beschreibung der Zeichnungen

Weitere vorteilhafte Ausgestaltungen der Erfindung ergeben sich aus der nachfolgenden Beschreibung von Ausführungsbeispielen der Erfindung mit Hilfe der schematischen Zeichnung. Insbesondere werden im Folgenden die erfindungsgemässe optische Folie und die erfindungsgemässe Leuchte unter Bezugnahme auf die beigefügten schematischen Zeichnungen anhand von Ausführungsbeispielen detaillierter beschrieben. Es zeigen:
- Fig. 1: eine perspektivische Ansicht eines Ausführungsbeispiels einer erfindungsgemässen optische Folie;
- Fig. 2: eine Seitenansicht der Folie von Fig. 1;
- Fig. 3: eine perspektivische Ansicht eines Ausführungsbeispiels einer erfindungsgemässen Leuchte mit der Folie von Fig. 1; und
- Fig. 4: Frontansicht der Leuchte von Fig. 3.

### Weg(e) zur Ausführung der Erfindung

Bestimmte Ausdrücke werden in der folgenden Beschreibung aus praktischen Gründen verwendet und sind nicht einschränkend zu verstehen. Die Wörter "rechts", "links", "unten" und "oben" bezeichnen Richtungen in der Zeichnung, auf die Bezug genommen wird. Die Ausdrücke "nach innen", "nach aussen" "unterhalb", "oberhalb", "links", "rechts" oder ähnliche werden zur Beschreibung der Anordnung bezeichneter Teile zueinander, der Bewegung bezeichneter Teile zueinander und der Richtungen hin zum oder weg vom geometrischen Mittelpunkt der Erfindung sowie benannter Teile derselben wie in den Fig. dargestellt verwendet. Diese räumlichen Relativangaben umfassen auch andere Positionen und Ausrichtungen als die in den Fig. dargestellten. Zum Beispiel, wenn ein in den Fig. dargestelltes Teil umgedreht wird, sind Elemente oder Merkmale, die als "unterhalb" beschrieben sind, dann "oberhalb". Die Terminologie umfasst die oben ausdrücklich erwähnten Wörter, Ableitungen von denselben und Wörter ähnlicher Bedeutung.

Um Wiederholungen in den Figuren und der zugehörigen Beschreibung der verschiedenen Aspekte und Ausführungsbeispielen zu vermeiden, sollen bestimmte Merkmale als gemeinsam für verschieden Aspekte und Ausführungsbeispiele verstanden werden. Das Weglassen eines Aspekts in der Beschreibung oder einer Figuren lässt nicht darauf schliessen, dass dieser Aspekt in dem zugehörigen Ausführungsbeispiel fehlt. Vielmehr kann ein solches Weglassen der Klarheit und dem Verhindern von Wiederholungen dienen. Auch können die Grössenverhältnisse der in den Fig. dargestellten Teile von den wirklichen Grössenverhältnissen abweichen. Beispielsweise ist in den Figuren die Dicke beziehungsweise Höhe der Folie im Verhältnis zu deren Ausdehnung beziehungsweise Fläche vergrössert dargestellt. Insbesondere können bestimmte Ausdehnungen vergrössert dargestellt sein, damit einzelne Merkmale besser ersichtlich sind.

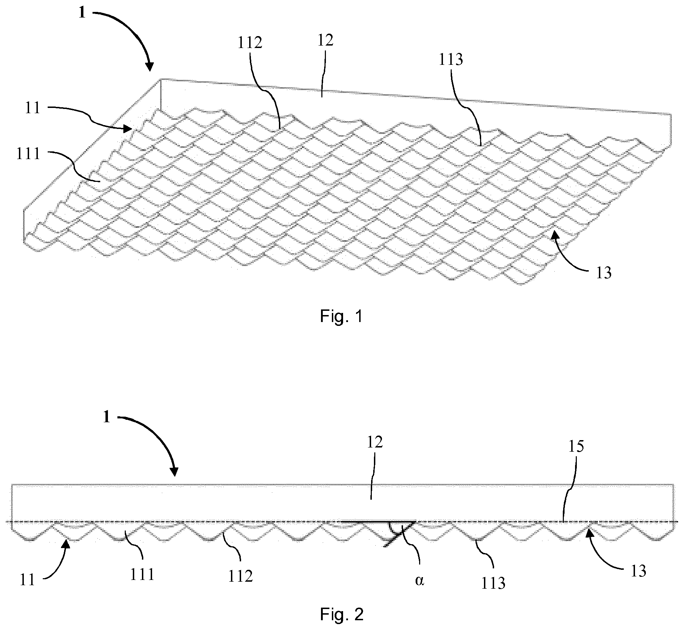

Fig. 1 zeigt schematisch ein Ausführungsbeispiel einer erfindungsgemässen optischen Folie 1. Die Folie 1 ist beispielsweise aus Polycarbonat als lichtdurchlässigem Material hergestellt. Sie umfasst einen flachen Basiskörper 12 und eine Oberfläche 13. Der flache Basiskörper 12 ist auf der Seite der Oberfläche 13 mit einer Mikrostruktur 11 ausgestattet, die eine Vielzahl von quasi hügelförmigen beziehungsweise quasi kegelförmigen Erhebungen 111 umfasst. Die Erhebungen 111 weisen Flankenabschnitte 112 auf, die jeweils in eine abgerundete Spitze 113 übergehen. Die Flankenabschnitte 112 grenzen dadurch an die zugehörigen abgerundeten Spitzen 113 an. Die Erhebungen 111 sind gleichförmig und gleichmässig über die Oberfläche 13 verteilt. Die Mikrostruktur 11 kann mittels Pressformung beispielsweise in einem Roll-To-Roll-Verfahren oder mittels Laserablation im Polycarbonat geformt sein.

Für die gesamte weitere Beschreibung gilt folgende Festlegung: Sind in einer Figur zum Zweck zeichnerischer Eindeutigkeit Bezugszeichen enthalten, aber im unmittelbar zugehörigen Beschreibungstext nicht erwähnt, so wird auf deren Erläuterung in vorangehenden Figurenbeschreibungen Bezug genommen. Sind ausserdem im unmittelbar zu einer Figur gehörigen Beschreibungstext Bezugszeichen erwähnt, die in der zugehörigen Figur nicht enthalten sind, so wird auf die vorangehenden und nachstehenden Figuren verwiesen. Ähnliche Bezugszeichen in zwei oder mehreren Fig. stehen für ähnliche oder gleiche Elemente.

Wie in Fig. 2 ersichtlich ist, weist die Folie 1 eine der Oberfläche 13 entsprechende Referenzebene 15 auf, von der die Erhebungen 111 der Mikrostruktur 11 abstehen. Die Flankenabschnitte 112 der Erhebungen 111 sind von der Seite her gerade ausgebildet. Sie grenzen an die Referenzebene 15 an beziehungsweise gehen von dieser aus. Die Flankenabschnitte 112 und die Referenzebene 15 beschreiben einen einheitlichen Winkel a, der über die ganze Folie 1 und den ganzen Umfang der einzelnen Erhebnungen 111 konstant ist. Der einheitliche Winkel α beträgt 35°, wobei gewisse Toleranzabweichungen beispielsweise aus fertigungstechnischen Gründen vorhanden sein können.

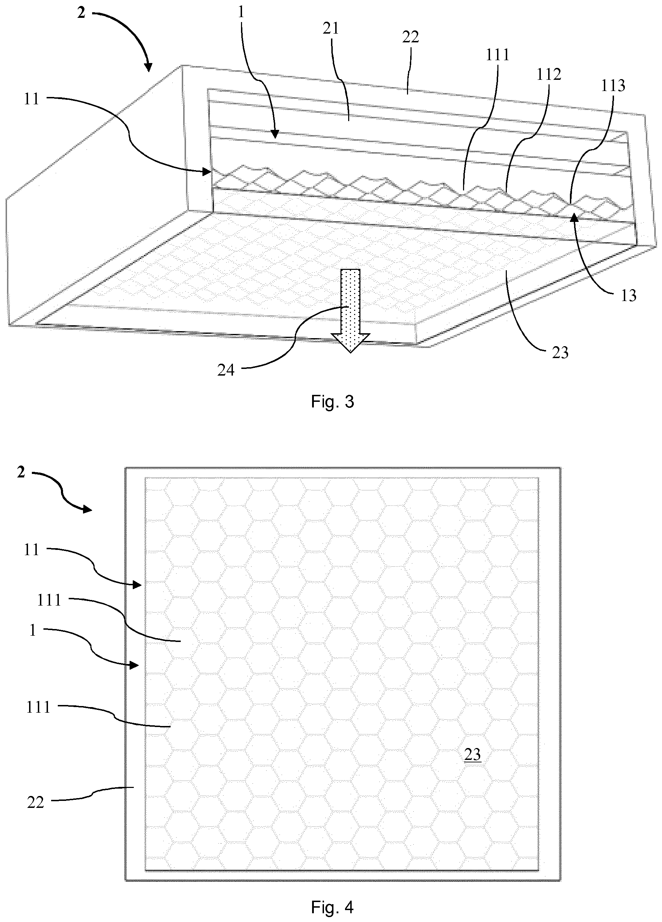

In Fig. 3 ist schematisch ein Ausführungsbeispiel einer erfindungsgemässen Leuchte 2 gezeigt, in der die Folie 1 angeordnet ist. Die Leuchte 2 ist als Deckenleuchte ausgebildet, die Licht in eine Abstrahlrichtung 24 vertikal nach unten abgibt. Die Leuchte 2 umfasst ein Gehäuse 22, in dem ein Leuchtmittel mit einer organischen Leuchtdiode (OLED-Leuchtmittel) 21 angeordnet ist. Das OLED-Leuchtmittel 21 strahlt Licht ungerichtet von seiner unteren Oberfläche ab. Ebenfalls im Gehäuse 22 ist die Folie 1 parallel zum OLED-Leuchtmittel 21 angebracht, wobei die Mikrostruktur 11 dem OLED-Leuchtmittel 21 abgewandt ist. Die Folie 1 deckt das OLED-Leuchtmittel 21 auf seiner lichtemittierenden unteren Oberfläche beziehungsweise in der Abstrahlrichtung 24 vollständig ab.

Nach unten hin ist das Gehäuse 22 von einer transparenten Optik 23 abgeschlossen. Die Optik 23 deckt die Folie 1 nach aussen hin ab. Im Betrieb der Leuchte 2 strahlt das OLED-Leuchtmittel 21 sein ungerichtetes Licht unterseitig ab. Dieses Licht durchdringt die Folie 1 und wird durch dessen Mikrostruktur 11 gerichtet und geformt. Insbesondere ermöglicht die Form der Erhebungen 111 mit dem einheitlichen Winkel α von 35°, dass auf wirksame Weise eine hohe Entblendung erreicht wird. Gleichzeitig ermöglicht sie auch eine effektive und präzise Formung des von der Leuchte 2 ausgestrahlten Lichts beziehungsweise eine effektive und präzise Erzeugung einer bevorzugten Lichtverteilungskurve (LVK). Über die abgerundeten Spitzen 113 der Erhebungen 111 können zudem unerwünschte Rainbow-Effekte minimiert werden.

Fig. 4 zeigt die Leuchte 2 von unten beziehungsweise von ihrer Optik 23 her. Dabei ist durch die transparente Optik 23 hindurch ersichtlich, dass die Erhebungen 111 der Mikrostruktur 11 der Folie 1 eine hexagonale Grundform aufweisen. Eine solche Grundform ermöglicht, dass die Folie 1 dicht beziehungsweise vollständig mit Erhebungen 111 bestückt ist.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Um die Erfindung nicht zu verklären, können in gewissen Fällen wohlbekannte Strukturen und Techniken nicht im Detail gezeigt und beschrieben sein. Es versteht sich, dass Fachleute Änderungen und Abwandlungen machen können, ohne den Umfang der folgenden Ansprüche zu verlassen.

Die vorliegende Offenbarung umfasst auch Ausführungsformen mit jeglicher Kombination von Merkmalen, die vorstehend oder nachfolgend zu verschiedenen Ausführungsformen genannt oder gezeigt sind. Sie umfasst ebenfalls einzelne Merkmale in den Figuren, auch wenn sie dort im Zusammenhang mit anderen Merkmalen gezeigt sind und/oder vorstehend oder nachfolgend nicht genannt sind. Auch können die in den Figuren und der Beschreibung beschriebenen Alternativen von Ausführungsformen und einzelne Alternativen deren Merkmale vom Erfindungsgegenstand beziehungsweise von den offenbarten Gegenständen ausgeschlossen sein. Die Offenbarung umfasst Ausführungsformen, die ausschliesslich die in den Ansprüchen beziehungsweise in den Ausführungsbeispielen beschriebenen Merkmale umfasst sowie auch solche, die zusätzliche andere Merkmale umfassen.

Im Weiteren schliesst der Ausdruck "umfassen" und Ableitungen davon andere Elemente oder Schritte nicht aus. Ebenfalls schliesst der unbestimmte Artikel "ein" bzw. "eine" und Ableitungen davon eine Vielzahl nicht aus. Die Funktionen mehrerer in den Ansprüchen aufgeführter Merkmale können durch eine Einheit beziehungsweise einen Schritt erfüllt sein. Die blosse Tatsache, dass bestimmte Masse in zueinander verschiedenen abhängigen Ansprüchen aufgeführt sind, bedeutet nicht, dass eine Kombination dieser Masse nicht vorteilhaft verwendet werden kann. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert. Die Begriffe "etwa" und "ungefähr" im Zusammenhang mit einem gegebenen Zahlenwert oder -bereich kann sich auf einen Wert beziehungsweise Bereich beziehen, der innerhalb 20%, innerhalb 10%, innerhalb 5% oder innerhalb 2% des gegebenen Werts beziehungsweise Bereichs liegt. Alle Bezugszeichen in den Ansprüchen sind nicht als den Umfang der Ansprüche einschränkend zu verstehen.

## Patentansprüche

1. Optische Folie (1) aus einem lichtdurchlässigen Material, die eine Oberfläche (13) und eine optische Mikrostruktur (11) mit einer Vielzahl von Erhebungen (111) umfasst und die flexibel ausgestaltet ist, wobei die Erhebungen (111) der Mikrostruktur (11) von einer Referenzebene (15) abstehen, die parallel zur Oberfläche (13) liegt, wobei die Erhebungen (111) der Mikrostruktur (11) jeweils einen an die Referenzebene (15) angrenzenden Flankenabschnitt (112) aufweisen, der einen einheitlichen Winkel (a) mit der Referenzebene (15) beschreibt, wobei der einheitliche Winkel (a) in einem Bereich in einem Bereich von etwa 33° bis etwa 42° oder in einem Bereich von etwa 35° bis etwa 40° liegt, **dadurch gekennzeichnet, dass** die Erhebungen (111) der Mikrostruktur (11) jeweils als Konus oder Kegel ausgestaltet sind und jeweils eine abgerundete Spitze aufweisen.

2. Optische Folie (1) nach Anspruch 1, bei der die Oberfläche (13) in der Referenzebene (15) liegt.

3. Optische Folie (1) nach Anspruch 1 oder 2, die aus einem Material mit einem Brechungsindex in einem Bereich von etwa 1.3 bis etwa 1.7 wie insbesondere aus Polycarbonat hergestellt ist.

4. Optische Folie (1) nach einem der vorangehenden Ansprüche, bei der die Erhebungen (111) der Mikrostruktur (11) eine hexagonale Grundfläche aufweisen.

5. Optische Folie (1) nach Anspruch 1, bei der die abgerundete Spitzen (113) der Erhebungen (111) jeweils an die Flankenabschnitte (112) angrenzen.

6. Optische Folie (1) nach einem der vorangehenden Ansprüche, bei der die Erhebungen (111) jeweils eine Grundfläche umfassen, die einen maximalen Durchmesser aufweist, der in einem Bereich von etwa 5 µm bis etwa 250 µm oder in einem Bereich von etwa 50 µm bis etwa 200 µm oder in einem Bereich von etwa 150 µm bis etwa 190 µm liegt.

7. Optische Folie (1) nach einem der vorangehenden Ansprüche, bei der die Erhebungen (111) jeweils eine Höhe aufweisen, die in einem Bereich von etwa 5 µm bis etwa 100 µm oder in einem Bereich von etwa 20 µm bis etwa 80 µm oder in einem Bereich von etwa 30 µm bis etwa 60 µm liegt.

8. Optische Folie (1) nach einem der vorangehenden Ansprüche, bei der alle Erhebungen (111) der Mikrostruktur (11) den gleichen einheitlichen Winkel (a) aufweisen.

9. Leuchte (2) mit einem Leuchtmittel (21) und einer optischen Folie (1) nach einem der vorangehenden Ansprüche, wobei mit dem Leuchtmittel (21) Licht im Wesentlichen ungerichtet abstrahlbar ist und wobei die optische Folie (1) das Leuchtmittel (21) in einer Abstrahlrichtung (24) der Leuchte (2) abdeckt.

10. Leuchte (2) nach Anspruch 9, die als Linearleuchte ausgebildet ist.

11. Leuchte (2) nach Anspruch 9 oder 10, bei der die optische Folie (1) unmittelbar benachbart zum Leuchtmittel (21) angeordnet ist.

12. Leuchte (2) nach einem der Ansprüche 9 bis 11, die eine transparente Optik aufweist, an der die optische Folie angebracht ist.

## Claims

1. Optical film (1) made from a light-permeable material, the optical film comprising a surface (13) and an optical microstructure (11) having a plurality of elevations (111) and the optical film being flexible, wherein the elevations (111) of the optical microstructure (11) protrude from a reference plane (15), which is parallel to the surface (13), wherein the elevations (111) of the microstructure (11) each have a flank section (112) which adjoins the reference plane (15) and which forms a uniform angle (a) with the reference plane (15), wherein the uniform angle (a) is in a range from about 33° to about 42° or in a range from about 35° to about 40°, **characterized in that** the elevations (111) of the microstructure (11) are each designed as cones or tapers and each have a rounded peak.

2. Optical film (1) according to claim 1, wherein the surface (13) is in the reference plane (15).

3. Optical film (1) according to claim 1 or 2, wherein the optical film (1) is produced from a material having a refractive index in a range from about 1.3 to about 1.7, the material being in particular polycarbonate.

4. Optical film (1) according to any one of the preceding claims, wherein the elevations (111) of the optical microstructure (11) have a hexagonal base area.

5. Optical film (1) according to according to claim 1, wherein the rounded peaks (113) of the elevations (111) each adjoin the flank sections (112).

6. Optical film (1) according to any one of the preceding claims, wherein the elevations (111) each comprise a base area, which has a maximum diameter which is within a range from about 5 µm to about 250 µm or in a range from about 50 µm to about 200 µm or in a range from about 150 µm to about 190 µm.

7. Optical film (1) according to any one of the preceding claims, wherein the elevations (111) each have a height which is within a range from about 5 µm to about 100 µm or in a range from about 20 µm to about 80 µm or in a range from about 30 µm to about 60 µm.

8. Optical film (1) according to any one of the preceding claims, wherein all elevations (111) of the optical microstructure (11) have the same uniform angle (a).

9. Light fixture (2) having a lighting means (21) and an optical film (1) according to any one of the preceding claims, wherein light can be radiated in a substantially undirected manner by the lighting means (21) and wherein the optical film (1) covers the lighting means (21) in a radiation direction (24) of the light fixture (2).

10. Light fixture (2) according to claim 9, wherein the light fixture (2) is formed as a linear light fixture.

11. Light fixture (2) according to claim 9 or 10, wherein the optical film (1) is arranged immediately adjacent to the lighting means (21).

12. Light fixture (2) according to any one of claims 9 to 11, wherein the light fixture (2) comprises a transparent optics to which the optical film is attached.

## Revendications

1. Film optique (1) en un matériau transparent, qui comprend une surface (13) et une microstructure optique (11) comportant une pluralité d'élévations (111) et qui est conçu pour être flexible, les élévations (111) de la microstructure (11) faisant saillie depuis un plan de référence (15) qui est parallèle à la surface (13), les élévations (111) de la microstructure (11) présentant respectivement une section de flanc (112) adjacente au plan de référence (15) et qui décrit un angle uniforme (α) avec le plan de référence (15), l'angle uniforme (α) étant situé dans une plage d'environ 33° à environ 42° ou dans une plage d'environ 35° à environ 40°, **caractérisé en ce que** les élévations (111) de la microstructure (11) sont respectivement conçues comme un cône ou un entonnoir et présentent respectivement une pointe arrondie.

2. Film optique (1) selon la revendication 1, dans lequel la surface (13) est située dans le plan de référence (15).

3. Film optique (1) selon la revendication 1 ou 2, qui est réalisé en un matériau d'indice de réfraction compris dans une plage d'environ 1,3 à environ 1,7, tel qu'en particulier du polycarbonate.

4. Film optique (1) selon l'une des revendications précédentes, dans lequel les élévations (111) de la microstructure (11) présentent une surface de base hexagonale.

5. Film optique (1) selon la revendication 1, dans lequel les pointes arrondies (113) des élévations (111) sont respectivement adjacentes aux sections de flanc (112).

6. Film optique (1) selon l'une des revendications précédentes, dans lequel les élévations (111) comprennent respectivement une surface de base qui présente un diamètre maximal situé dans une plage d'environ 5 µm à environ 250 µm ou dans une plage d'environ 50 µm à environ 200 µm ou dans une plage d'environ 150 µm à environ 190 µm.

7. Film optique (1) selon l'une des revendications précédentes, dans lequel les élévations (111) présentent respectivement une hauteur comprise dans une plage d'environ 5 µm à environ 100 µm ou dans une plage d'environ 20 µm à environ 80 µm ou dans une plage d'environ 30 µm à environ 60 µm.

8. Film optique (1) selon l'une des revendications précédentes, dans lequel toutes les élévations (111) de la microstructure (11) présentent le même angle uniforme (α).

9. Luminaire (2) comportant un moyen lumineux (21) et un film optique (1) selon l'une des revendications précédentes, dans lequel de la lumière peut être émise de manière sensiblement non directionnelle par le moyen lumineux (21) et dans lequel le film optique (1) recouvre le moyen lumineux (21) dans une direction d'émission (24) du luminaire (2).

10. Luminaire (2) selon la revendication 9 formé comme un luminaire linéaire.

11. Luminaire (2) selon la revendication 9 ou 10, dans lequel le film optique (1) est disposé directement adjacent au moyen lumineux (21).

12. Luminaire (2) selon l'une des revendications 9 à 11, lequel présente une optique transparente sur laquelle est fixé le film optique.
